(19) Europäisches Patentamt
European Patent Office
Office européen des brevets

(11) **EP 3 412 907 B1**

(12) **EUROPEAN PATENT SPECIFICATION**

(45) Date of publication and mention
of the grant of the patent:
**20.01.2021 Bulletin 2021/03**

(51) Int Cl.:
*F03D 7/02* *(2006.01)*        *F03D 80/00* *(2016.01)*

(21) Application number: **17174723.1**

(22) Date of filing: **07.06.2017**

(54) **MULTI-SURFACE YAW BRAKING SYSTEM FOR A WIND TURBINE**

MEHRFLÄCHIGES AZIMUTH-BREMSSYSTEM FÜR EINE WINDTURBINE

SYSTÈME DE FREINAGE DE LACET MULTI-SURFACE POUR UNE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.12.2018 Bulletin 2018/50**

(73) Proprietor: **S.B. Patent Holding ApS
5882 Vejstrup (DK)**

(72) Inventor: **Woods, James A. W.
5874 Hesselager (DK)**

(74) Representative: **Haseltine Lake Kempner LLP
138 Cheapside
London EC2V 6BJ (GB)**

(56) References cited:
**EP-A1- 2 532 886     EP-A1- 3 165 764
EP-A2- 2 306 008     JP-A- 2010 048 244**

## Description

### BACKGROUND OF THE INVENTION

#### a. Field of the Invention

This invention relates to yaw braking systems used in wind turbines. In particular, the invention relates to a yaw braking system that employs multiple braking discs to reduce and better distribute loads within the system.

#### b. Background Art

In a conventional horizontal axis wind turbine, a tower extends vertically from the ground and a nacelle is disposed on top of the tower. The nacelle houses and supports the electricity generating components of the wind turbine including a rotor having a hub supported on a shaft that rotates about a substantially horizontal axis and one or more blades extending radially from the hub and a generator that generates electricity responsive to rotation of the shaft.

The nacelle is configured to rotate relative to the tower about a substantially vertical or yaw axis in order to orient the blades in the direction of the prevailing wind. Proper orientation of the nacelle is important to prevent uneven loads on the rotor and to maximize the efficiency of the wind turbine. Rotation of the nacelle relative to the tower is controlled by a yaw system. The yaw system may, for example, include a toothed ring that is fixed to the tower and a motor activated gear fixed to the nacelle and in mesh with the toothed ring such that activation of the motor results in rotation of the nacelle relative to the tower. Bearings may be interposed between the tower and nacelle to facilitate rotation of the nacelle relative to the tower. The yaw system further includes a brake disc that is fixed to the tower (e.g., as a part of the toothed ring) or nacelle and a plurality of yaw brakes that can engage the brake disc when partially applied to control and dampen movement of the nacelle about the yaw axis and when fully applied to fix the rotational position of the nacelle relative to the tower.

The yaw brakes in a conventional yaw system experience significant loads both when partially applied and fully applied. As a result, the brakes must be made from materials that are relatively heavy and expensive. Further, as wind turbine sizes increase and the resulting loads increase, conventional yaw brakes are reaching the outer limits of the material strength of known, commercially reasonable, materials that are used in brake calipers and in the bolts used to connect the calipers to surrounding structure in the turbine. The increasing loads in larger wind turbines have also resulted in an increase in size of the brakes-an increase that is consuming larger amounts of valuable space within the turbine. The large loads in conventional yaw systems also place significant demands on the actuating system for the brakes (e.g.,

requiring significant hydraulic or pneumatic pressure or current draws) and cause significant wear on friction materials and increasing failure rates in the brakes themselves resulting in frequent maintenance and significant costs in terms of material, manpower and downtime. Finally, conventional yaw brakes are a significant source of noise and vibration within the turbine and are also significantly affected by noise and vibration from other elements within the turbine.

The inventor herein has recognized a need for a yaw braking system for a wind turbine that will reduce one or more of the above-identified deficiencies and/or provide improved performance.

EP2306008 (A2) discloses a yaw bearing assembly having the pre-characterising features of claim 1 below.

### BRIEF SUMMARY OF THE INVENTION

This invention relates to yaw braking systems in wind turbines. In particular, the invention relates to a yaw braking system that employs multiple braking discs to reduce and better distribute loads within the system.

According to the present invention, there is provided a wind turbine having the features of claim 1 below.

The yaw braking system of a wind turbine in accordance with the invention represents an improvement as compared to conventional yaw braking systems. The use of multiple brake discs increases the friction area and reduces and distributes loads incurred during braking. As a result, the yaw brakes acting on the discs can be made smaller thereby reducing space requirements for the brakes. Further, the brakes can be made with conventional, and commercially reasonable, materials. The reduction in loads also reduces the actuating forces required to actuate the brake thereby reducing fluid pressure or current draws in the actuating system and facilitating the use of electrical actuators that may have previously been impractical. The reduction in loads also results in reduced wear on friction materials within the braking system and a reduction in failure rates for the brakes thereby reducing maintenance and material, manpower, and downtime costs. The broader distribution of loads and the lower surface pressures at the friction interfaces also reduces noise and vibration imparted by the brakes into the turbine and from the turbine into the brakes. The system is also easily scalable to increase or decrease braking force by adding or reducing the number of discs.

The foregoing and other aspects, features, details, utilities, and advantages of the present invention will be apparent from reading the following description and claims, and from reviewing the accompanying drawings.

### BRIEF DESCRIPTION OF THE DRAWINGS

Figure 1 is a perspective view of a wind turbine.

Figure 2 is a schematic view of a portion of the wind turbine of Figure 1.

Figure 3 is a cross-sectional view of a wind turbine incorporating a yaw braking system in accordance with one embodiment of the present teachings.

Figure 4 is a cross-sectional view of a portion of the yaw braking system of Figure 3.

Figure 5 is a cross-sectional view of a portion of a yaw braking system in accordance with another embodiment of the present teachings.

Figure 6 is a cross-sectional view of a portion of a yaw braking system in accordance with another embodiment of the present teachings.

Figures 7 is a perspective view of a portion of a yaw braking system in accordance with another embodiment of the present teachings.

Figures 8-9 are perspective views of brake disc segments of the yaw braking system of Figure 7.

Figure 10 is a perspective view of a yaw braking system in accordance with another embodiment of the present teachings.

Figures 11-12 are perspective views of the mounting brackets of the yaw braking system of Figure 10.

Figures 13-14 are perspective views of brake disc segments of the yaw braking system of Figure 10

Figure 15 is a perspective view of the friction ring segment of the yaw braking system of Figure 10.

Figure 16 is a plan view of a yaw braking system in accordance with another embodiment of the present teachings.

Figure 17 is a cross-sectional view of a portion of the yaw braking system of Figure 16,

Figure 18 is a perspective view of a portion of the yaw braking system of Figure 16.

Figure 19 is a perspective view of a yaw brake of the yaw braking system of Figures 16.

DETAILED DESCRIPTION OF THE INVENTION

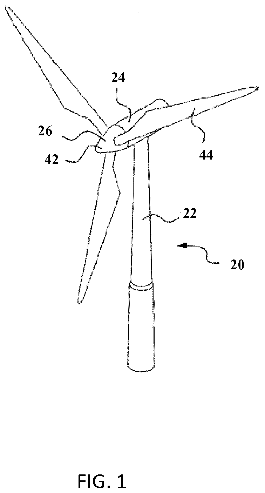

Referring now to the drawings wherein like reference numerals are used to identify identical components in the various views, Figures 1-2 illustrate a wind turbine 20 in accordance with one embodiment of the present invention. Turbine 20 is provided to convert wind energy to electrical energy. Turbine 20 comprises a horizontal axis wind turbine (HAWT). Turbine 20 may include a tower 22, a nacelle 24, a rotor 26, a gearbox 28, a generator 30, a brake 32 and a yaw system 34.

Tower 22 provides structural support for turbine 20 and is provided to locate rotor 26 in higher velocity winds further from the ground. In the illustrated embodiment, tower 22 comprises a freestanding tower that is supported by a foundation (not shown) and, in particular, a cylindrical monopole tower. It should be understood, however, that tower 22 may comprise other forms of freestanding towers such as a self-supporting lattice tower or towers that have support elements such as guy wires or buttresses including guyed lattice towers or tilt-up towers. Tower 22 may be made from rolled steel plates that are fastened together by welds or other fasteners. Tower 22 may include internal and external ladders and doors to allow access to components of turbine 20 on top of tower 22 including in nacelle 24.

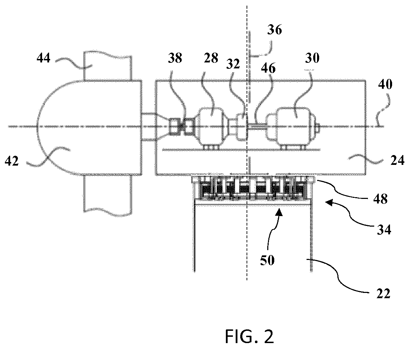

Nacelle 24 houses and supports the electricity generating components of turbine 20 and provides a means for orienting rotor 26 relative to prevailing winds. Referring to Figure 2, nacelle 24 is supported on tower 22 and is configured to rotate relative to tower 22 about a vertical or yaw axis 36 extending longitudinally through tower 22.

Rotor 26 converts straight-line wind forces into torque used to rotate a shaft 38 about a substantially horizontal axis 40 (relative to earth ground). Rotor 26 includes a hub 42 coupled to the shaft 38 and one or more blades 44 extending radially outward from the hub 42. Straight-line winds cause blades 44--and therefore hub 42 and shaft 38--to rotate about axis 40.

Gearbox 28 is provided to translate the low speed, high torque rotation of shaft 38 into a high speed, low torque rotation of a shaft 46 extending into generator 30. Gearbox 28 may comprise, for example, a planetary gearbox, helical gearbox or worm gearbox. It should be understood that gearbox 28 may be eliminated and generator 30 may be driven directly by rotor 26 depending on the design of generator 30.

Generator 30 is provided to convert mechanical energy from the rotation of shaft 46 into electrical energy. Generator 30 may comprise an asynchronous machine and may be coupled to an electricity grid through conventional conductors.

Brake 32 is provided to reduce or halt rotation of shaft 36 during, for example, maintenance of turbine 20 or during periods with extremely strong winds to prevent damage to generator 30. Brake 32 may comprise a drum brake or a disc brake.

Yaw system 34 controls the rotational position of nacelle 24 relative to tower 22 in order to locate rotor 26 relative to prevailing winds. Referring to Figures 2-3, yaw system 34 may include a yaw drive (not shown), a yaw bearing 48 and a yaw braking system 50 in accordance with the present teachings.

The yaw drive is provided to cause rotation of nacelle 24 relative to tower 22 about yaw axis 36. The drive may be mounted on nacelle 24 and may include a motor, such as an alternating current motor, a gearbox configured to increase the output torque of the motor, and a gear that is driven by the motor and that has gear teeth configured to mesh with teeth on a toothed ring (not shown) affixed to tower 22. It should be understood that the relative positions of the yaw drive and the toothed ring could be reversed such that the toothed ring is mounted on nacelle 24 while the yaw drive is mounted on tower 22.

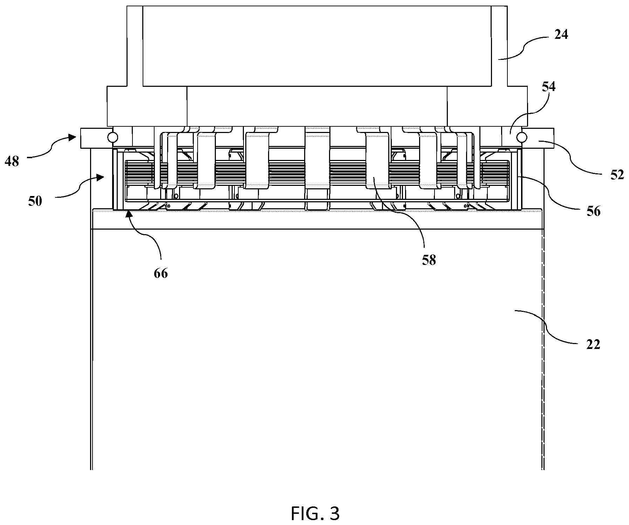

Yaw bearing 48 is provided to facilitate smooth motion of nacelle 24 relative to tower 22 and is disposed between tower 22 and nacelle 24. Bearing 48 may comprise a roller bearing or a gliding bearing. Referring to Figure 3, in one embodiment bearing 48 may comprise a roller bearing having one race 52 fixed to tower 22 and another race 54 fixed to nacelle 24. In the illustrated embodiment, the two races 52, 54 are radially aligned. It should be understood, however, that the races could alternatively be aligned in the direction of axis 36.

Yaw braking system 50 is provided to control and dampen rotational movement of nacelle 24 relative to tower 22 during rotation of nacelle 24. System 50 is also provided to maintain nacelle 24 in a fixed rotational position relative to tower 22 once nacelle 24 has reached a desired position. Referring to Figures 3-4, one embodiment of system 50 may include two sets of mounting brackets 56, 58, two sets of brake discs 60, 62, friction rings 64, and a plurality of yaw brakes 66.

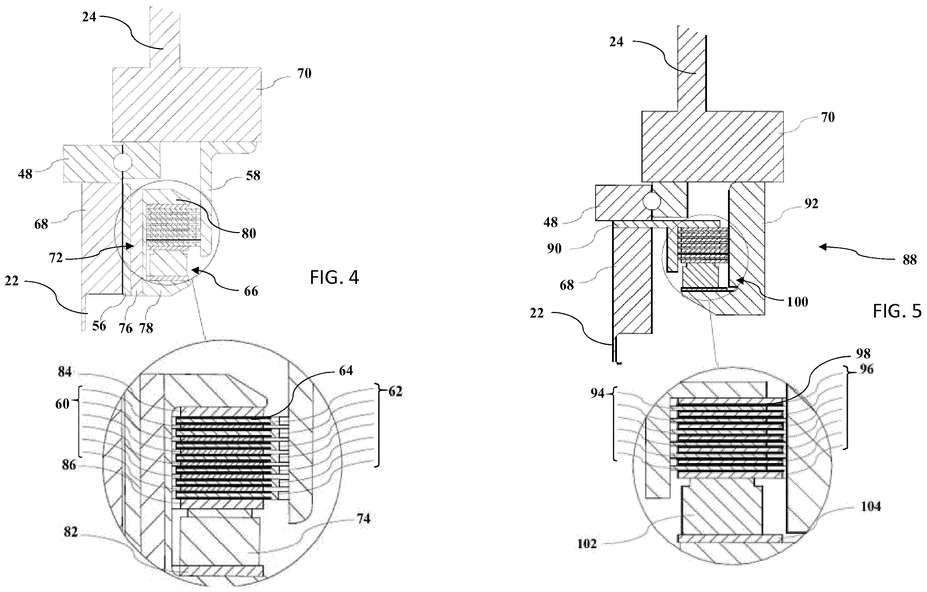

Brackets 56 are provided to support brake discs 60 and yaw brakes 66. Brackets 56 may be made from conventional metals and metal alloys. Brackets 56 are configured to be fixed to tower 22. Referring to Figure 4, in the illustrated embodiment, brackets 56 are fixed to a radially inwardly extending flange 68 of tower 22. Tower 22 is typically divided into a plurality of sections. Flanges 68 disposed at the end of each section may be used to join adjacent sections. Flange 68 may be formed with the body of a section of tower 22 (i.e., such that flange 68 and the body of the section of tower 22 form a unitary (one-piece) structure) or may be a separate structure that is joined to the section of tower 22. Brackets 56 may be fixed to flange 68 using conventional fasteners such as screws, bolts, welds or adhesives. Brackets 56 may comprise flat rectangular plates having a plurality of fastener bores configured to receive fasteners that extend through brackets 56 and into flange 68. It should be understood, however, that the shape of brackets 56 may vary. Brackets 56 are circumferentially spaced from one another and may be connected to one another by a stiffening ring in some embodiments.

Brackets 58 are provided to support brake discs 62. Brackets 58 may likewise be made from conventional metals and metal alloys. Brackets 58 are configured to be fixed to nacelle 24 and, referring to Figure 4, may be configured to depend from a bedframe 70 of nacelle 24. Brackets 58 may be fixed to bedframe 70 using conventional fasteners such as screws, bolts, welds or adhesives. Referring to Figures 3-4, in the illustrated embodiment, brackets 58 are generally L-shaped in cross-section with a horizontally extending leg having a pair of fastener bores configured to receive fasteners extending through brackets 58 and into bedframe 70 and a vertically extending leg configured to support brake discs 62. It should be understood, however, that the shape of brackets 58 may vary. Brackets 58 are circumferentially spaced from one another and may be connected to one another by a stiffening ring in some embodiments.

Brake discs 60 and 62 are provided to create friction to control or halt rotation of nacelle 24 relative to tower 22. Discs 60, 62 are annular in shape and are disposed about, and may be centered about, yaw axis 36. Discs 60 are fixed to tower 22. In particular, discs 60 are supported by brackets 56 and connected to brackets 56 at a radially outer edge. Discs 62 are fixed to nacelle 24. In particular, discs 24 are supported by brackets 58 and are connected to brackets 58 at a radially inner edge. Discs 60 and 62 are aligned with one another in a direction extending parallel to yaw axis 36 and interleaved such that each disc 60 is separated from another disc 60 by a disc 62 and each disc 62 is separated from another disc 62 by a disc 60. The use of multiple brake discs establishes additional friction surfaces and significant increases in the area over which braking forces are applied. As a result, braking forces used to brake nacelle 24 may be reduced and the forces may be distributed over a wider area. In particular, the required brake clamping loads (C) are directly proportional to the braking torque (T) and inversely proportional to the effective radius ($r_e$) of the braking surface, the coefficient of friction ($u_f$) of the friction materials and the number (n) of friction faces:

$$C = \frac{T}{r_e * u_f * n}$$

By increasing the number of friction faces (n), the less clamping force (C) is required by the brakes 66 (alternatively, or in addition, materials that have a lower coefficient of friction ($u_f$) and therefore less expensive can be employed). The reduction and broader distribution of braking forces has a number of significant benefits. The yaw brakes 66 experience a significant reduction in loads during braking relative to conventional yaw brake systems. As a result, the brakes 66 can be made from conventional materials yet still be used in large turbines. The brakes 66 can also be made relatively small freeing up additional space within the turbine 20. Further, fluid pressure or current draws used to actuate the brakes 66 can be reduced. The reduction and distribution of braking forces also reduces the wear on friction linings 64 and the failure rate in brakes 66 thereby reducing maintenance and material, manpower, and downtime costs. The broader distribution of loads and the lower surface pressures at the friction interfaces also reduces noise and vibration imparted by the brakes 66 into the turbine 20 and from the turbine 20 into the brakes 66 and facilitates the use of noise dampening shims or mounting structures that would otherwise be unable to handle conventional loads. The braking system 50 is also easily scalable to increase or decrease braking force by adding or reducing the number of discs 60, 62.

Friction rings 64 are provided to increase friction between discs 60, 62. Rings 64 may be made from conventional friction materials. Rings are annular in shape and are disposed between each pair of discs 60, 62. In accordance with one aspect of the present teachings, rings 64 may not be bonded to either of discs 60, 62 and instead may rest loosely between discs 60, 62 thereby eliminating the costs associate with bonding rings 64 to a backing plate or other support structure as in conventional yaw brakes. The large size of discs 60, 62 and rings 64, the relatively slow rotation of nacelle 24 about axis, the tight tolerances between discs 60, 62 and rings 64 and the location of brackets 56, 58 on either radial side of rings 64 combine to make it unlikely that rings 64 will become displaced.

Yaw brakes 66 urge discs 60, 62 and rings 64 towards one another to create friction and thereby brake rotation of nacelle 24. Brakes 66 are configured for movement between a partially applied position in which the brakes 66 apply a braking force used to control and dampen movement of nacelle 24 about axis 36 as nacelle 24 rotates about axis 36 and a fully applied position in which the brakes 66 apply a greater braking force used to fix the rotational position of nacelle 24 relative to tower 22. Brakes 66 are circumferentially spaced from one another. In accordance with one aspect of the disclosed systems, brakes 66 may be configured to apply different levels of braking force to the discs 60, 62 and rings 64 such that the braking force applied by one brake 66 when in the partially applied position differs from the braking force applied by another brake 66 when in the partially applied position and/or the braking force applied by one brake 66 when in the fully applied position differs from the braking force applied by another brake 66 when in the fully applied position. Variation in the braking force by each actuator can, for example, be used to remove glazing from the brake discs 60, 62. Each brake 66 of braking system 50 includes a caliper body 72 and an actuator 74.

Caliper body 72 provides a means for mounting brake 66 to tower 22 and a means for supporting and orienting actuator 74. Caliper body 72 also provides a reaction surface opposing the force generated by actuator 74 in order to compress brake discs 60, 62 and rings 64 upon application of the brake 66. Referring to Figure 4, body 72 includes a spacer plate 76 and opposed jaws 78, 80. Plate 76 is configured for coupling to bracket 56 and tower 22 and the length of plate 76 defines the spacing between jaws 78, 80 which in turn is defined by the number of desired friction surfaces which in turn is defined by the desired braking torque. Jaws 78, 80 extend from either longitudinal end of plate 76 in a radially inward direction relative to yaw axis 36. Jaws 78, 80 are disposed on opposite sides of the set of brake discs 60, 62 and friction rings 64 such that, for any given pair of discs 60, 62, jaw 78 is disposed on one side of disc 60 opposite disc 62 and jaw 80 is disposed on one side of disc 62 opposite disc 60. Each jaw 78, 80 may support a force transfer plate 82, 84, respectively, for transfer of active and reactive brake forces to discs 60, 62 and rings 64. Jaw 78 may further support an actuator base plate 86 for locating the actuator 74 between jaw 78 and the force transfer plate 82.

Actuator 74 is provided to apply and control a braking force to discs 60, 62 and rings 64. Actuator 74 is supported on jaw 78 and is configured for movement away from jaw 78 and towards discs 60, 62 and rings 64 in a direction parallel to yaw axis 36 as actuator 74 moves from a partially applied position to a fully applied position. In accordance with one aspect of the present teachings, actuator 74 may assume a plurality of forms. Actuator 74 may comprise a hydraulically driven or pneumatically driven actuator in which movement of piston towards and away from discs 60, 62 and rings 64 is controlled by hydraulic or pneumatic pressure. For actuators of this type, caliper body 72 may define one or more fluid passageways for delivery of fluid to, and removal of fluid from, the actuator and may define a fluid connection connectable to a source of fluid. Actuator 74 may alternatively comprise an electrically driven actuator in which a solenoid causes linear movement of a rod towards and away from discs 60, 62 and rings 64. In yet another embodiment, actuator 74 may comprise a pair of members having mating threads or cam surfaces such that rotation of one member relative to the other (e.g., by imparting torque to one member through an electric motor driven belt or chain surrounding surfaces or teeth on the member) causes linear movement of the member towards and away from discs 60, 62 and rings 64. Because the yaw braking systems disclosed herein incur reduced loads, and better distribute those loads, actuator 74 may assume a variety of forms that previously were difficult to implement in yaw braking systems. Further, the actuators 74 operate with lower energy demands in terms of fluid pressure and/or current draws.

Referring now to Figure 5, another embodiment of a yaw braking system 88 for turbine 20 is illustrated. System 88 is similar to system 50, but mounts the yaw brakes on nacelle 24 as opposed to tower 22. System 88 is again provided to control and dampen rotational movement of nacelle 24 relative to tower 22 during rotation of nacelle 24 and to maintain nacelle 24 in a fixed rotational position relative to tower 22 once nacelle 24 has reached a desired position. System 88 may again include two sets of mounting brackets 90, 92, two sets of brake discs 94, 96, friction rings 98, and a plurality of yaw brakes 100.

Brackets 90 are provided to support brake discs 94. Brackets 90 may be made from conventional metals and metal alloys. Brackets 90 are configured to be fixed to tower 22. Brackets 90 may again be fixed to a radially inwardly extending flange 68 of tower 22. Brackets 90 may be fixed to flange 68 using conventional fasteners such as screws, bolts, welds or adhesives. Brackets 90 may be substantially T-shaped in cross-section with a radially extending leg and an axially extending leg relative to yaw axis 36. It should be understood, however, that the shape of brackets 90 may vary. The radially extending leg may be coupled at one longitudinal end to flange 68 and may define a reaction surface at an opposite longitudinal end opposing the force generated by the actuator of brake 100 in order compress brake discs 94, 96 and friction rings 98 upon application of the brake 100. The axially extending leg is configured to support brake discs 94 such that discs 94 are axially aligned and spaced from one another. Brackets 90 are circumferentially spaced from one another and may be connected to one another by a stiffening ring in some embodiments.

Brackets 92 are provided to support brake discs 96 and yaw brakes 100. Brackets 92 may be made from conventional metals and metal alloys. Brackets 92 are configured to be fixed to nacelle 24 and may be configured to depend from a bedframe 70 of nacelle 24. Brackets 92 may be fixed to bedframe 70 using conventional fasteners such as screws, bolts, welds or adhesives. In the illustrated embodiment brackets 92 are generally L-shaped in cross-section with a radially extending leg configured to support brake 100 and an axially extending leg configured to support brake discs 96 and for fixing bracket 92 to nacelle 24. It should be understood, however, that the shape of brackets 92 may vary. Brackets 92 are circumferentially spaced from one another and may be connected to one another by a stiffening ring in some embodiments.

Brake discs 94, 96, and friction rings 98 may be substantially similar to discs 60, 62 and rings 64, respectively, described above. Discs 94 are fixed to tower 22. In particular, discs 94 are supported by brackets 90 and are connected to brackets 90 at a radially outer edge. Discs 96 are fixed to nacelle 24. In particular, discs 96 are supported by brackets 92 and are connected to brackets 92 at a radially inner edge. Discs 94 and 96 are again aligned with one another in a direction extending parallel to yaw axis 36 and interleaved such that each disc 94 is separated from another disc 94 by a disc 96 and each disc 96 is separated from another disc 96 by a disc 94. Rings 98 are disposed between each pair of discs 94, 96. In accordance with one aspect of the present teachings, rings 98 may again not be bonded to either of discs 94, 96 and instead may rest loosely between discs 94, 96.

Yaw brakes 100 urge discs 94, 96 and rings 98 towards one another to create friction and thereby brake rotation of nacelle 24. Brakes 100 are again configured for movement between a partially applied position in which the brakes 100 apply a braking force used to control and dampen movement of nacelle 24 about axis 36 as nacelle 24 rotates about axis 36 and a fully applied position in which the brakes 100 apply a greater braking force used to fix the rotational position of nacelle 24 relative to tower 22. In accordance with one aspect of the disclosed systems, brakes 100 may again be configured to apply different levels of braking force to the discs 94, 96 and rings 98 such that the braking force applied by one brake 100 when in the partially applied position differs from the braking force applied by another brake 100 when in the partially applied position and/or the braking force applied by one brake 100 when in the fully applied position differs from the braking force applied by another brake 100 when in the fully applied position. Each brake 100 of braking system 88 includes an actuator 102. Actuator 102 may be similar to actuator 74 described above. In the illustrated embodiment, brake 100 does not include a separate caliper body because the radially extending legs of brackets 90, 92 act as a caliper body defining opposed jaws that provide a means for supporting and orienting actuator 102 and provides a reaction surface opposing the force generated by actuator 102 in order compress brake discs 94, 96 and rings 98 upon application of the brake 100. These jaws may again each support a force transfer plate (not shown) for transfer of active and reactive brake forces to discs 94, 96 and rings 98 and an actuator base plate 104 for locating the actuator 102.

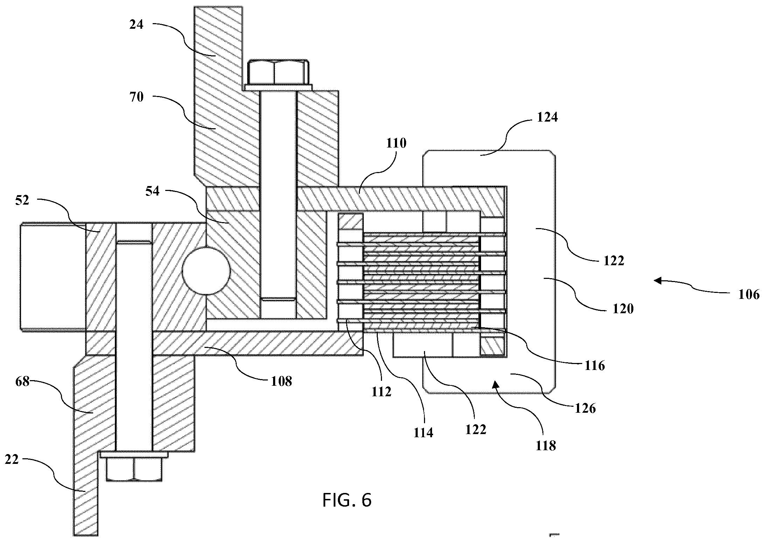

Referring now to Figure 6, another embodiment of a yaw braking system 106 for turbine 20 is illustrated. System 106 is similar to systems 50, 88, but is configured for mounting to races 52, 54 of yaw bearing 48. In this manner, system 106 is able to take advantage of existing mounting surfaces and mechanisms between the yaw bearing 48 and the tower flange 68 and nacelle bedframe 70 and is not dependent on finding a dedicated mounting surface on the flange 68 or bedframe 70. System 106 is again provided to control and dampen rotational movement of nacelle 24 relative to tower 22 during rotation of nacelle 24 and to maintain nacelle 24 in a fixed rotational position relative to tower 22 once nacelle 24 has reached a desired position. System 106 may again include two sets of mounting brackets 108, 110, two sets of brake discs 112, 114, friction rings 116, and a plurality of yaw brakes 118.

Brackets 108 are provided to support brake discs 112. Brackets 108 maybe made from conventional metals and metal alloys. Brackets 108 are configured to be fixed to tower 22 through outer race 52 of yaw bearing 48 which is itself fixed to tower 22. Brackets 108 may be fixed to race 52 using conventional fasteners such as screws, bolts, welds or adhesives. Brackets 108 may be substantially L-shaped in cross-section with a radially extending leg and an axially extending leg relative to yaw axis 36. It should be understood, however, that the shape of brackets 108 may vary. The radially extending leg may be coupled to race 52. The axially extending leg is configured to support brake discs 112 such that discs are axially aligned and spaced from one another. Brackets 108 are circumferentially spaced from one another and may be connected to one another by a stiffening ring in some embodiments.

Brackets 110 are provided to support brake discs 114 and yaw brakes 118. Brackets 110 may be made from conventional metals and metal alloys. Brackets 110 are configured to be fixed to nacelle 24 through inner race 54 of yaw bearing 48 which it itself fixed to nacelle 24. Brackets 110 may be fixed to race 54 using conventional fasteners such as screws, bolts, welds or adhesives. Brackets 110 may be substantially L-shaped in cross-section with a radially extending leg and an axially extending leg relative to yaw axis 36. It should be understood, however, that the shape of brackets 110 may vary. The radially extending leg may be coupled to race 54 and be configured to support brake 118. The axially extending leg may be configured to support brake discs 114 such that discs 114 are axially aligned and spaced from one another. Brackets 110 are circumferentially spaced from one another and may be connected to one another by a stiffening ring in some embodiments.

Brake discs 112, 114 and friction rings 116 may be substantially similar to discs 60, 62 and rings 64, respectively, described above. Discs 112 are fixed to tower 22. In particular, discs 112 are supported by brackets 108 and are connected to brackets 108 at a radially outer edge. Discs 14 are fixed to nacelle 24. In particular, discs 114 are supported by brackets 110 and are connected to brackets 110 at a radially inner edge. Discs 112 and 114 are again aligned with one another in a direction extending parallel to yaw axis 36 and interleaved such that each disc 112 is separated from another disc 112 by a disc 114 and each disc 114 is separated from another disc 114 by a disc 112. Rings 116 are disposed between each pair of discs 112, 114. In accordance with one aspect of the present teachings, rings 116 may again not be bonded to either of discs 112, 114 and instead may rest loosely between discs 112, 114.

Yaw brakes 118 urge discs 112, 114 and rings 116 towards one another to create friction and thereby brake rotation of nacelle 24. Brakes 118 are again configured for movement between a partially applied position in which the brakes 118 apply a braking force used to control and dampen movement of nacelle 24 about axis 36 as nacelle 24 rotates about axis 36 and a fully applied position in which the brakes 118 apply a greater braking force used to fix the rotational position of nacelle 24 relative to tower 22. In accordance with one aspect of the disclosed systems, brakes 118 may again be configured to apply different levels of braking force to the discs 112, 114, and rings 116 such that the braking force applied by one brake 118 when in the partially applied position differs from the braking force applied by another brake 118 when in the partially applied position and/or the braking force applied by one brake 118 when in the fully applied position differs from the braking force applied by another brake 118 when in the fully applied position. Brakes 118 are circumferentially spaced from one another. Each brake 118 of braking system 106 includes a caliper body 120 and an actuator 122.

Caliper body 120 provides a means for mounting brake 118 to nacelle 24 and a means for supporting and orienting actuator 122. Caliper body 120 also provides a reaction surface opposing the force generated by actuator 122 in order compress brake discs 112, 114, and rings 116 upon application of the brake 118. Body 120 includes a spacer plate 122 and opposed jaws 124, 126. Plate 122 is configured for coupling to bracket 110 and nacelle 24 and the length of plate 122 defines the spacing between jaws 124, 126. Jaws 124, 126 extend from either longitudinal end of plate 122 in a radially outward direction relative to yaw axis 36. Jaws 124, 126 are disposed on opposite sides of the set of brake discs 112, 114 and friction rings 116 such that, for any given pair of discs 112, 114, jaw 124 is disposed on one side of disc 112 opposite disc 114 and jaw 126 is disposed on one side of disc 114 opposite disc 112. Each jaw 124, 126 may support a force transfer plate (not shown) for transfer of action and reaction brake forces to discs 112, 114 and rings 116. Jaw 126 may further support an actuator base plate (not shown) for locating the actuator 122 between jaw 126 and the force transfer plate.

Actuator 122 is provided to apply and control a braking force to discs 114, 116 and rings 118. Actuator 122 is supported on jaw 126 and is configured for movement away from jaw 126 and towards discs 114, 116 and rings 118 in a direction parallel to yaw axis 36 as actuator 122 moves from a partially applied position to a fully applied position. Actuator 122 may be substantially similar to actuator 74 described above.

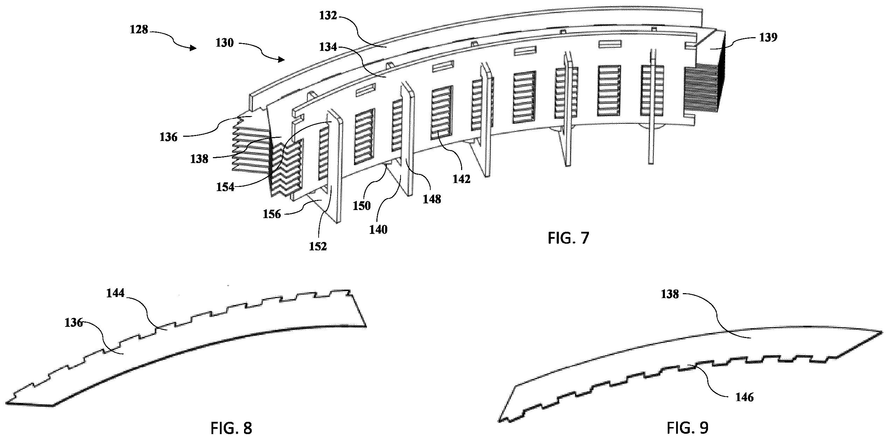

Referring now to Figures 7-9, a portion of another embodiment of a yaw braking system 128 for turbine 20 is illustrated. In accordance with one aspect of the present teachings, yaw system 129 may be divided into a plurality of separate circumferential sections 130 to facilitate ease of manufacture, transport and maintenance. Each circumferential section 130 may be separately coupled to tower 22 and nacelle 24 (either to flange 68 of tower 22 and bedframe 70 of nacelle 24 or through races 52, 54 of yaw bearing 48). Each section 130 includes mounting brackets 132, 134, two sets of brake disc segments 136, 138, friction ring segments 139, and one or more yaw brakes 140.

Brackets 132, 134 are provided to support brake discs 136, 138, respectively. One of brackets 132, 134 (bracket 134 in the illustrated embodiment) is also configured to support yaw brakes 140. Brackets 132, 134 may be made from conventional metals and metal alloys. Brackets 132 are configured to be fixed to tower 22 (by connection to flange 68 or outer race 52 of yaw bearing 48) while brackets 134 are configured to be fixed to nacelle 24 (by connection to bedframe 70 of nacelle 24 or inner race 54 of yaw bearing 48) using conventional fasteners such as screws, bolts, welds or adhesives. Brackets 132, 134 may be curved with the circumferential length of the curve being determined by the number of sections 130 forming system 128. Brackets 132, 134 define a plurality of notches 142 configured to receive corresponding teeth or projections 144, 146 on brake disc segments 136, 138 and friction ring segments 139.

Brake disc segments 136, 138 and friction ring segments 139 may form brake discs and friction rings that are substantially similar to discs 60, 62 and rings 64, respectively, described above upon assembly of system 128. Disc segments 136 are fixed to tower 22. In particular, disc segments 136 are supported by brackets 132 and are connected to brackets 132 at a radially outer edge where projections 144 extending radially outwardly from disc segments 136 extend into corresponding notches in bracket 132. Disc segments 138 are fixed to nacelle 24. In particular, disc segments 138 are supported by brackets 134 and are connected to brackets 134 at a radially inner edge where projections 146 extending radially inwardly from disc segments 138 extend into corresponding notches 142 in bracket 146. Upon assembly of system 128, disc segments 136 and 138 are again aligned with one another in a direction extending parallel to yaw axis 36 and interleaved such that each disc segment 136 is separated from another disc segment 136 by a disc segment 138 and each disc segment 138 is separated from another disc segment 138 by a disc segment 136. Friction ring segments 139 are disposed between each pair of disc segments 136, 138. In accordance with one aspect of the present teachings, ring segments 139 may again not be bonded to either of disc segments 136, 138 and instead may rest loosely between disc segments 136, 138.

Yaw brakes 140 urge disc segments 136, 138 and ring segments 139 towards one another to create friction and thereby brake rotation of nacelle 24. Brakes 140 are again configured for movement between a partially applied position in which the brakes 140 apply a braking force used to control and dampen movement of nacelle 24 about axis 36 as nacelle 24 rotates about axis 36 and a fully applied position in which the brakes 140 apply a greater braking force used to fix the rotational position of nacelle 24 relative to tower 22. In accordance with one aspect of the disclosed systems, brakes 140 may again be configured to apply different levels of braking force to the disc segments 136, 138 and ring segments 139 such that the braking force applied by one brake 140 when in the partially applied position differs from the braking force applied by another brake 140 when in the partially applied position and/or the braking force applied by one brake 140 when in the fully applied position differs from the braking force applied by another brake 140 when in the fully applied position. Brakes 140 are circumferentially spaced from one another. Each brake 140 of braking system 128 includes a caliper body 148 and an actuator 150.

Caliper body 148 provides a means for mounting brake 140 to nacelle 24 and a means for supporting and orienting actuator 150. Caliper body 148 also provides a reaction surface opposing the force generated by actuator 150 in order compress brake disc segments 136, 138 and the ring segments upon application of the brake 140. Body 148 includes a spacer plate 152 and opposed jaws 154, 156. Plate 152 is configured for coupling to bracket 134 and nacelle 24 and the length of plate 152 defines the spacing between jaws 154, 156. Jaws 154, 156 extend from either longitudinal end of plate 152 in a radially outward direction relative to yaw axis 36. Jaws 154, 156 are disposed on opposite sides of the set of brake disc segments 136, 138 and ring segments such that, for any given pair of disc segments 136, 138, jaw 154 is disposed on one side of disc segment 136 opposite disc segment 138 and jaw 156 is disposed on one side of disc segment 138 opposite disc segment 136. Each jaw 154, 156 may support a force transfer plate (not shown) for transfer of action and reaction brake forces to disc segments 136, 138 and the ring segments. Jaw 156 may further support an actuator base plate (not shown) for locating the actuator 150 between jaw 156 and the force transfer plate.

Actuator 150 is provided to apply and control a braking force to disc segments 136, 138 and the ring segments. Actuator 150 is supported on jaw 156 and is configured for movement away from jaw 156 and towards disc segments 136, 138 and the ring segments in a direction parallel to yaw axis 36 as actuator 150 moves from a partially applied position to a fully applied position. Actuator 150 may be substantially similar to actuator 74 described above.

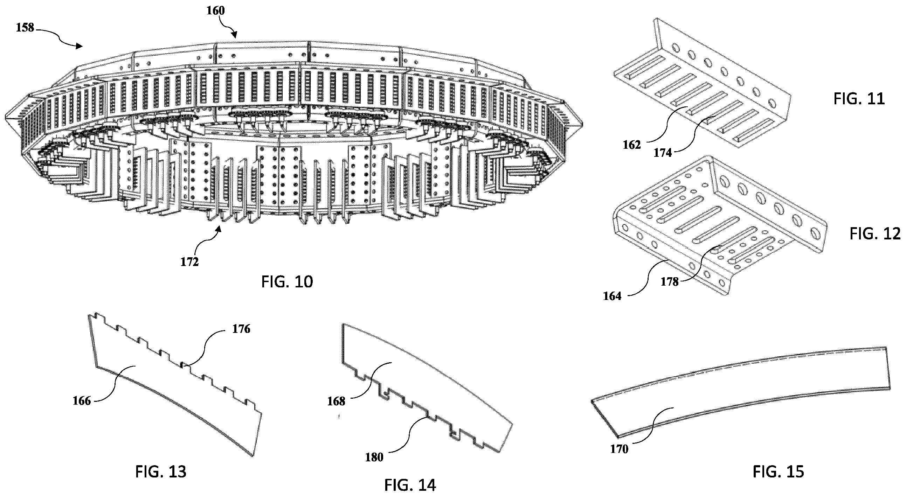

Referring now to Figures 10-15, another embodiment of a yaw braking system 158 for turbine 20 is illustrated. Like system 128, yaw braking system 158 may be divided into a plurality of separate circumferential sections 160 that may be separately coupled to tower 22 and nacelle 24 (either to flange 68 of tower 22 and bedframe 70 of nacelle 24 or through races 52, 54 of yaw bearing 48). Unlike system 128, each section 160 of yaw braking system 158 includes mounting brackets that are substantially straight and brake disc and friction ring segments having a straight edge to facilitate easier manufacture of the brackets and a reduction in costs for system 158. The large diameter of system 158 enables the use of sections 160 that form a polygonal shape approximating a circular, rounded structure. Each section 160 of system 158 again includes mounting brackets 162, 164, two sets of brake disc segments 166, 168, friction ring segments 170, and one or more yaw brakes 172.

Brackets 162, 164 are provided to support brake discs 166, 168, respectively. One of brackets 162, 164 (bracket 164 in the illustrated embodiment) is also configured to support yaw brakes 172. Brackets 162, 164 may be made from conventional metals and metal alloys. Brackets 162 are configured to be fixed to tower 22 (by connection to flange 68 or outer race 52 of yaw bearing 48) while brackets 164 are configured to be fixed to nacelle 24 (by connection to bedframe 70 of nacelle 24 or inner race 54 of yaw bearing 48) using conventional fasteners such as screws, bolts, welds or adhesives. Brackets 162, 164 are straight with the length being determined by the number of sections 160 forming system 158. In particular, bracket 162 has at least a radially outer planar surface while bracket 164 has at least a radially inner planar surface such that brackets 162, 164 form a polygonal shape about axis 36 upon assembly. Referring to Figure 11, bracket 162 is substantially L-shaped in cross-section with a radially outwardly extending leg and an axially extending leg relative to yaw axis 36. The radially extending leg is configured for attachment to tower 22. The axially extending leg defines a plurality of notches 174 configured to receive corresponding projections 176 on brake disc segments 166 (Figure 13). Referring to Figure 12, bracket 164 is substantially C-shaped in cross-section with a pair of axially spaced radially outwardly extending legs and an axially extending body relative to yaw axis 36. One of the radially extending legs is configured for attachment to nacelle 24. The other radially extending leg is configured with the axially extending body to support brakes 172. The axially extending body also defines a plurality of notches 178 configured to receive corresponding projections 180 on brake disc segments 166 (Figure 14).

Referring to Figures 13-15, brake disc segments 166, 168 and friction ring segments 170 may form brake discs and friction rings that are substantially similar to discs 60, 62 and rings 64, respectively, described above upon assembly of system 158. Disc segments 166 are fixed to tower 22. In particular, disc segments 166 are supported by brackets 162 and are connected to brackets 162 at a radially outer edge where projections 176 extending radially outwardly from disc segments 166 extend into corresponding notches 174 in bracket 162. Disc segments 168 are fixed to nacelle 24. In particular, disc segments 168 are supported by brackets 164 and are connected to brackets 164 at a radially inner edge where projections 180 extending radially inwardly from disc segments 168 extend into corresponding notches 178 in bracket 164. Upon assembly of system 158, disc segments 166, 168 are again aligned with one another in a direction extending parallel to yaw axis 36 and interleaved such that each disc segment 166 is separated from another disc segment 166 by a disc segment 168 and each disc segment 168 is separated from another disc segment 168 by a disc segment 166. Friction ring segments 170 are disposed between each pair of disc segments 166, 168. In accordance with one aspect of the present teachings, ring segments 170 may again not be bonded to either of discs 166, 168 and instead may rest loosely between disc segments 166, 168.

Referring again to Figure 10, yaw brakes 172 urge disc segments 166, 168 and ring segments 170 towards one another to create friction and thereby brake rotation of nacelle 24. Brakes 172 are again configured for movement between a partially applied position in which the brakes 172 apply a braking force used to control and dampen movement of nacelle 24 about axis 36 as nacelle 24 rotates about axis 36 and a fully applied position in which the brakes 172 apply a greater braking force used to fix the rotational position of nacelle 24 relative to tower 22. In accordance with one aspect of the disclosed systems, brakes 172 may again be configured to apply different levels of braking force to the discs 166, 168 and rings 170 such that the braking force applied by one brake 172 when in the partially applied position differs from the braking force applied by another brake 172 when in the partially applied position and/or the braking force applied by one brake 172 when in the fully applied position differs from the braking force applied by another brake 172 when in the fully applied position. Brakes 172 are circumferentially spaced from one another. Each brake 172 of braking system 158 includes a caliper body and an actuator which may be similar to caliper body 148 and actuator 150 in brake 140 describe above.

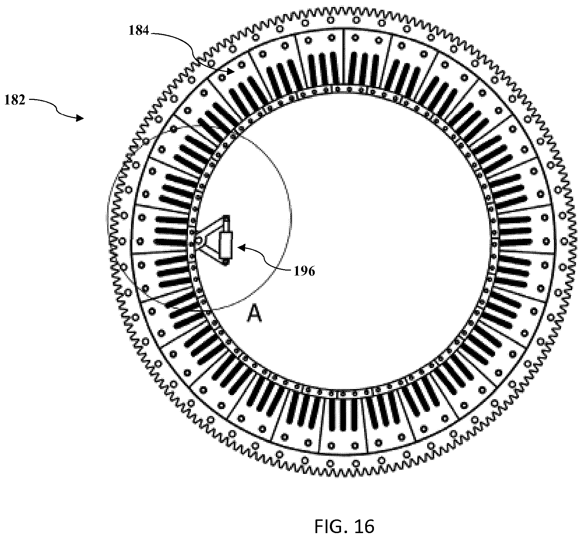

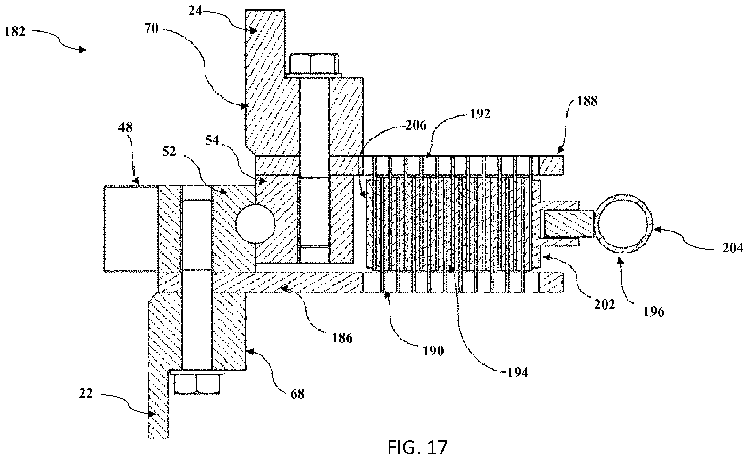

Referring now to Figure 16-19, another embodiment of a yaw braking system 182 for turbine 20 is illustrated. System 182 differs from the prior systems described herein in that system 182 orients the brake discs and friction rings vertically such that they are aligned in a radial direction relative to yaw axis 36 and the braking force is applied in a radial direction relative to axis 36. This arrangement provides numerous additional benefits. The arrangement facilitates the use of straight mounting brackets that are less costly to make and easier to mount within the turbine. The arrangement reduces the height of the yaw system making it easy to locate the system above or below yaw bearing 48. The system 182 is easier to reinforce and is easily scalable. Actuation of the system 182 is also simpler and less expensive as exemplified by the actuator described below used with system 182. The friction rings are better contained and can therefore be held loosely between the brake discs without bonding to the brake discs reducing costs. Referring to Figure 16, system 182 may again be divided into a plurality of separate circumferential sections 184 that may be separately coupled to tower 22 and nacelle 24 (either to flange 68 of tower 22 and bedframe 70 of nacelle 24 or through races 52, 54 of yaw bearing 48). Referring to Figure 17-18, each section 184 of system 182 again includes mounting brackets 186, 188 two sets of brake disc segments 190, 192 and friction ring segments 194. In some embodiments, each section 184 may further include brakes similar to any of brakes 66, 100, 118, 140 or 172 described hereinabove. In the illustrated embodiment, however, system 182 employs a single brake 196 that acts on each section 184 of system 182.

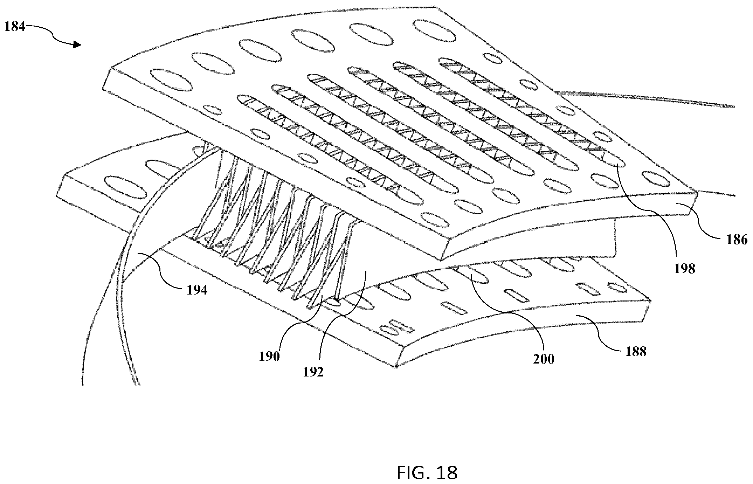

Brackets 186, 188 are provided to support brake discs 190, 192, respectively. Brackets 186, 188 may be made from conventional metals and metal alloys. Brackets 186 are configured to be fixed to tower 22 (by connection to flange 68 or outer race 52 of yaw bearing 48 as shown in Figure 17) while brackets 168 are configured to be fixed to nacelle 24 (by connection to bedframe 70 of nacelle 24 or inner race 54 of yaw bearing 48 as shown in Figure 17) using conventional fasteners such as screws, bolts, welds or adhesives. Referring to Figure 18, the radially inner and outer edges of brackets 186, 188 are curved in the illustrated embodiment with the length being determined by the number of sections 184 forming system 182. It should be understood, however, that radially inner and outer edges of brackets 186, 188 may alternatively be formed with straight edges and planar surfaces in a manner similar to system 158 described above. Brackets 186, 188 are substantially flat in the illustrated embodiment and form annular structures when assembled into system 182. Each bracket 186, 188 may define a plurality of fastener bores configured to receive fasteners (not shown) used to couple brackets 186, 188 to tower 22 and nacelle 24. Each bracket 186, 188 may further define a plurality of notches 198, 200 configured to receive corresponding projections (not shown) on brake disc segments 190, 192.

Brake disc segments 190, 192 are provided to create friction to control or halt rotation of nacelle 24 relative to tower 22. Upon assembly of system 182, segments 190, 192 may form essentially annular brake discs that are disposed about, and may be centered about, yaw axis 36. In accordance with the disclosed embodiment, segments 190, 192 are oriented vertically and are radially aligned relative to yaw axis 36. The radius of each brake disc segment and the diameter of each fully disc will therefore increase moving radially outwardly from axis 36 such that the circumferential length of disc segments 190, 192 varies and increases moving radially outward relative to axis 36. The use of disc segments 190, 192 allows for a change in circumference of each disc as wear occurs. Referring to Figure 17, in the illustrated embodiment segments 190, 192 are also radially aligned with yaw bearing 48. Disc segments 190 are fixed to tower 22. In particular, disc segments 190 are supported by brackets 186 and are connected to brackets 186 at one axial end. Disc segments 192 are fixed to nacelle 24. In particular, disc segments 192 are supported by brackets 188 and are connected to brackets 188 at one axial end. Disc segments 190 and 192 are aligned with one another in a direction extending radially relative to yaw axis 36 and are interleaved such that each disc segment 190 is separated from another disc segment 190 by a disc segment 192 and each disc segment 192 is separated from another disc segment 192 by a disc segment 190. Again, the use of multiple brake discs establishes additional friction surfaces and significant increases in the area over which braking forces are applied. As a result, braking forces used to brake nacelle 24 may be reduced and the forces may be distributed over a wider area. The reduction and broader distribution of braking forces again has a number of significant benefits. The yaw brake 196 or brakes experience a significant reduction in loads during braking relative to conventional yaw brake systems. As a result, the brakes 196 can be made from conventional materials yet still be used in large turbines. The brakes can also be made relatively small freeing up additional space within the turbines. Further, fluid pressure or current draws used to actuate the brakes can be reduced. The reduction and distribution of braking forces also reduces the wear on friction rings 194 and the failure rate in the brakes 196 thereby reducing maintenance and material, manpower, and downtime costs. The broader distribution of loads and the lower surface pressures at the friction interfaces also reduces noise and vibration imparted by the brakes 196 into the turbine 20 and from the turbine 20 into the brakes 196 and facilitates the use of noise dampening shims or mounting structures that would otherwise be unable to handle conventional loads. The braking system 182 is also easily scalable to increase or decrease braking force by adding or reducing the number of discs 190, 192.

Friction ring segments 194 are provided to create friction between disc segments 190, 192. Ring segments 194 may be made from conventional friction materials. Ring segments 194 are disposed between each pair of disc segments 190, 192 and form an annular friction ring upon assembly of system 182. In accordance with one aspect of the present teachings, ring segments 194 may not be bonded to either of disc segments 190, 192 and instead may rest loosely between disc segments 190, 192 thereby eliminating the costs associate with bonding ring segments 194 to a backing plate or other support structure as in conventional yaw brakes. The large size of disc segments 190, 192 and ring segments 194, the relatively slow rotation of nacelle 24 about axis 36, and the tight tolerances between disc segments 190, 192 and ring segments 194 makes it unlikely that ring segments 194 will become displaced. Further, ring segments 194 are surrounded by brackets 186, 188 in an axial direction and adjacent disc segments 190, 192 in a radial direction thereby further preventing movement of ring segments 194.

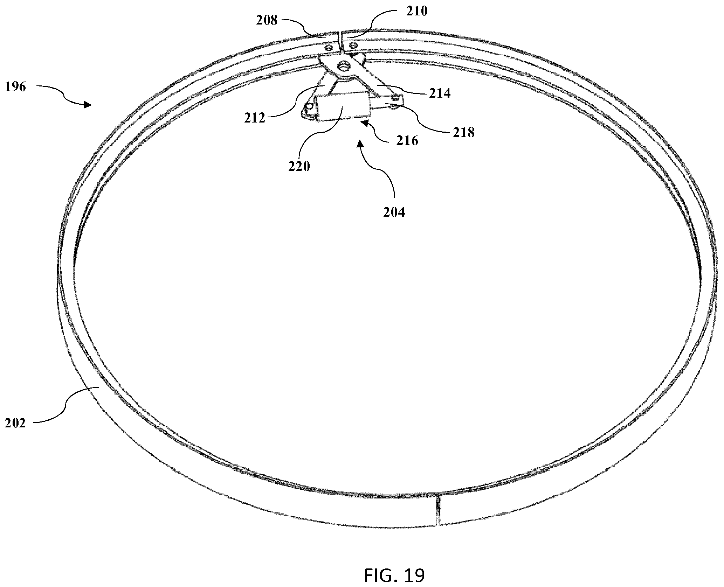

Yaw brake 196 is urges disc segments 190, 192 and ring segments 194 towards one another to create friction and thereby brake rotation of nacelle 24. Brake 196 is again configured for movement between a partially applied position in which the brake 196 applies a braking force used to control and dampen movement of nacelle 24 about axis 36 as nacelle 24 rotates about axis 36 and a fully applied position in which the brake 196 applies a greater braking force used to fix the rotational position of nacelle 24 relative to tower 22. Referring to Figure 19, brake 196 includes a ring 202 and an actuator 204.

Ring 202 provides means for transferring a braking force to disc segments 190, 192 and ring segments 194. Ring 202 may be made from conventional metals and metal alloys. Referring to Figure 17, ring 202 may be pi-shaped in cross-section with an axially extending leg and a pair of parallel, radially inwardly extending legs. The axially extending leg is configured to act against disc segments 190, 192 and ring segments 194. In some embodiments, the axially extending leg may include a friction material bonded to radially outer surface of the leg. The radially extending legs are configured to support actuator 204. Ring 202 is annular in shape and is disposed about, and may be centered about, yaw axis 36. Ring 202 is disposed radially inwardly of the brake discs formed by disc segments 190, 192. A reaction ring 206 may be disposed radially outwardly of the brake discs to clamp disc segments 190, 192 and ring segments 194 upon actuation of brake 196. The reaction ring 206 may be collapsible to reduce the diameter of ring 206 and change the diameter of system 182 to adjust for wear. Referring again to Figure 19, ring 202 may be divided into multiple segments that are coupled to one another. Further, ring 202 is split and uncoupled at one location to define a pair of circumferential ends 208, 210.

Actuator 204 is configured to change the diameter of ring 202 in order to move the brake 196 between a partially applied and fully applied position. In particular, actuator 204 is configured to expand ring 202 to move brake 196 from the partially applied position to the fully applied position. Although the illustrated embodiment locates the brake actuator 204 radially inwardly of the brake discs formed by segments 190, 192, it should be understood that the orientation of ring 202 and actuator 204 could be reversed such that ring 202 and actuator 204 are disposed radially outwardly of the discs formed by segments 190, 192 and the actuator 204 is configured to compress the ring 202 to move the brake 196 from the partially applied position to the fully applied position. Actuator 204 includes a pair of scissor arms 212, 214 and mean, such as piston assembly 216, for moving the ends of the scissor arms 212, 214 away from one another to expand ring 202. Scissor arms 212, 214 are disposed about a common pivot axis and may be coupled to one another by a pin (not shown) centered on the pivot axis. One longitudinal end of each arm 212, 214 is coupled to a corresponding circumferential end 208, 210 of ring 202. The other longitudinal end of each arm 212, 214 is coupled to opposite ends of piston assembly 216. Piston assembly 216 includes a rod 218 disposed within, and movable relative to, a fluid cylinder 220. Increasing the fluid pressure within cylinder 220 forces rod 218 further outward from cylinder 220 and causes the ends of scissor arms 212, 214 to move away from one another to expand ring 202. Although a particular means for expanding ring 202 has been shown, it should be understood that other fluid (hydraulic or pneumatic) and electromagnetic actuation systems could be employed including, for example, an electric motor driven linear actuator that move scissor arms 212, 214. In another embodiment, a tubular, ring shaped fluid bladder may be disposed against the radially inner side of ring 202 and inflated to expand ring 202.

While the invention has been shown and described with reference to one or more particular embodiments thereof, it will be understood by those of skill in the art that various changes and modifications can be made without departing from the scope of the claims below.

**Claims**

1. A wind turbine (20), comprising:

   a tower (22),
   a nacelle (24) supported on the tower (22) and configured for rotation relative to the tower (22) about a yaw axis (36);
   a first brake disc (60 or 94 or 112 or 136 or 166 or 190) fixed to the tower (22) and disposed about the yaw axis (36) **characterized by**:

   a second brake disc (62 or 96 or 114 or 138 or 168 or 192) fixed to the nacelle (24) and disposed about the yaw axis (36), the second brake disc (62 or 96 or 114 or 138 or 168 or 192) aligned with the first brake disc (60 or 94 or 112 or 136 or 166 or 190); and, a first yaw brake (66 or 100 or 118 or 140 or 172 or 196) configured for movement between a first position in which the first yaw brake (66 or 100 or 118 or 140 or 172 or 196) applies a first braking force to the first and second brake discs (60, 62 or 94, 96 or 112, 114 or 136, 138 or 166, 168 or 190, 192) and a second position in which the first yaw brake (66 or 100 or 118 or 140 or 172 or 196) applies a second braking force to the first and second brake discs (60, 62 or 94, 96 or 112, 114 or 136, 138 or 166, 168 or 190, 192), the second braking force greater than the first braking force.

2. The wind turbine (20) of claim 1, further comprising:

   a first bracket (56 or 90 or 132 or 162) supporting the first brake disc (60 or 94 or 136 or 166) and fixed to a radially inwardly extending flange (68) of the tower (22); and,
   a second bracket (58 or 92 or 134 or 164) supporting the second brake disc (62 or 96 or 138 or 168) and fixed to a bedframe (70) of the nacelle (24).

3. The wind turbine (20) of claim 2 wherein each of the first and second brackets (132, 134 of 162, 164) are divided into a plurality of separate circumferential sections, the first and second brackets (132, 134 or 162, 164) having radially inner and outer planar surfaces such that the first bracket (132 or 162) and the second bracket (162, 164) form a polygonal shape around the yaw axis (36).

4. The wind turbine (20) of any of claims 1-3 wherein each of the first and second brake discs (60, 62 or 94, 96 or 112, 114 or 136, 138 or 166, 168 or 190, 192) are divided into a plurality of separate circumferential sections.

5. The wind turbine (20) of claims 1-4, further comprising a third brake disc (60 or 94 or 112 or 136 or 166 or 190) fixed to the tower (22) and disposed about the yaw axis (36) on an opposite side of the second brake disc (62 or 96 or 114 or 138 or 168 or 192) relative to the first brake disc (60 or 94 or 112 or 136 or 166 or 190).

6. The wind turbine of claims 1-4, further comprising a third brake disc (62 or 96 or 114 or 138 or 168 or 192) fixed to the nacelle (24) and disposed about the yaw axis (36) on an opposite side of the first brake disc (60 or 94 or 112 or 136 or 166 or 190) relative to the second brake disc (62 or 96 or 114 or 138 or 168 or 192).

7. The wind turbine (20) of any of claims 1-6, further comprising a yaw bearing (48) disposed between the tower (22) and the nacelle (24) wherein the first brake disc (112 or 190) is supported by a first race (52) of the yaw bearing (48) fixed to the tower (22) and the second brake disc (114 or 192) is supported by a second race (54) of the yaw bearing (48) fixed to the nacelle (24).

8. The wind turbine (20) of any of claims 1-7, further comprising a friction ring (64 or 98 or 116 or 170 or 194) disposed between the first and second brake discs (60, 62 or 94, 96 or 112, 114 or 136, 138 or 166, 168 or 190, 192), the friction ring (64 or 98 or 116 or 170 or 194) not bonded to the first brake disc (60 or 94 or 112 or 136 or 166 or 190) and not bonded to the second brake disc (62 or 96 or 114 or 138 or 168 or 192).

9. The wind turbine (20) of any of claims 1-8, further comprising a second yaw brake spaced (66 or 100 or 118 or 140 or 172) circumferentially from the first yaw brake (66 or 100 or 118 or 140 or 172) and configured for movement between a first position in which the second yaw brake (66 or 100 or 118 or 140 or 172) applies a first braking force to the first and second brake discs (60, 62 or 94, 96 or 112, 114 or 136, 138 or 166, 168) and a second position in which the second yaw brake (66 or 100 or 118 or 140 or 172) applies a second braking force to the first and second brake discs (60, 62 or 94, 96 or 112, 114 or 136, 138 or 166, 168), the second braking force greater than the first braking force.

10. The wind turbine (20) of claim 9, wherein the at least one of the first and second braking forces applied by the first yaw brake (66 or 100 or 118 or 140 or 172) differs from a corresponding one of the first and second braking forces applied by the second yaw brake (66 or 100 or 118 or 140 or 172).

11. The wind turbine (20) of any of claims 1-10 wherein the first and second brake discs (60, 62 or 94, 96 or 112, 114 or 136, 138 or 166, 168) are aligned in the direction of the yaw axis (36) and the first yaw brake (66 or 100 or 118 or 140 or 172) applies the braking force in a direction parallel to the yaw axis.

12. The wind turbine (20) of claims 1-10 wherein the first and second brake discs (190, 192) are radially aligned relative to the yaw axis (36) and the first yaw brake (196) applies the braking force in a radial direction relative to the yaw axis (36).

13. The wind turbine (20) of claim 12, wherein the first yaw brake comprises:

a ring disposed radially outwardly of the first and second brake discs; and, an actuator configured to compress the ring when the first yaw brake moves from the first position to the second position.

14. The wind turbine (20) of claim 12, wherein the first yaw brake (196) comprises:

a ring (202) disposed radially inwardly of the first and second brake discs (190, 192); and, an actuator (204) configured to expand the ring (202) when the first yaw brake (196) moves from the first position to the second position.

15. The wind turbine (20) of claim 14, wherein the actuator (204) comprises:

a first scissor arm (212) having a first end coupled to a first circumferential end (208) of the ring (202); a second scissor arm (214) having a first end coupled to a second circumferential end (210) of the ring (202); and, means (216), connected to the second ends of the first and second scissor arms (212, 214), for moving the second ends of the first and second scissor arms (212, 214) away from one another to expand the ring (202).

**Patentansprüche**

1. Windturbine (20), umfassend:

einen Turm (22), eine Gondel (24), die auf dem Turm (22) getragen und für eine Drehung in Bezug auf den Turm (22) um eine Gierachse (36) konfiguriert ist; eine erste Bremsscheibe (60 oder 94 oder 112 oder 136 oder 166 oder 190), die an dem Turm (22) befestigt und um die Gierachse (36) angeordnet ist, **gekennzeichnet durch**:

eine zweite Bremsscheibe (62 oder 96 oder 114 oder 138 oder 168 oder 192), die an der Gondel (24) befestigt und um die Gierachse (36) angeordnet ist, wobei die zweite Bremsscheibe (62 oder 96 oder 114 oder 138 oder 168 oder 192) mit der ersten Bremsscheibe (60 oder 94 oder 112 oder 136 oder 166 oder 190) ausgerichtet ist; und eine erste Gierbremse (66 oder 100 oder 118 oder 140 oder 140 oder 172 oder 196), die für eine Bewegung zwischen einer ersten Position, in der die erste Gierbremse (66 oder 100 oder 118 oder 140 oder 172 oder 196) eine erste Bremskraft auf die erste und die zweite Bremsscheibe (60, 62 oder 94, 96 oder 112, 114 oder 136, 138 oder 166, 168 oder 190, 192) anwendet, und einer zweiten Position, in der die erste Gierbremse (66 oder 100 oder 118 oder 140 oder 172 oder 196) eine zweite Bremskraft auf die erste und die zweite Bremsscheibe (60, 62 oder 94, 96 oder 112, 114 oder 136, 138 oder 166, 168 oder 190, 192) anwendet, konfiguriert ist, wobei die zweite Bremskraft größer als die erste Bremskraft ist.

2.  Windturbine (20) gemäß Anspruch 1, ferner umfassend:

    eine erste Halterung (56 oder 90 oder 132 oder 162), die die erste Bremsscheibe (60 oder 94 oder 136 oder 166) trägt und an einem sich radial nach innen erstreckenden Flansch (68) des Turms (22) befestigt ist; und
    eine zweite Halterung (58 oder 92 oder 134 oder 164), die die zweite Bremsscheibe (62 oder 96 oder 138 oder 168) trägt und an einem Bettungsrahmen (70) der Gondel (24) befestigt ist.

3.  Windturbine (20) gemäß Anspruch 2, wobei jede von der ersten und der zweiten Halterung (132, 134 von 162, 164) in eine Vielzahl von separaten Umfangsabschnitten unterteilt ist, wobei die erste und die zweite Halterungen (132, 134 oder 162, 164) radial innere und äußere ebene Flächen aufweisen, sodass die erste Halterung (132 oder 162) und die zweite Halterung (162, 164) eine polygonale Form um die Gierachse (36) bilden.

4.  Windturbine (20) gemäß einem der Ansprüche 1-3, wobei jede von der ersten und der zweiten Bremsscheibe (60, 62 oder 94, 96 oder 112, 114 oder 136, 138 oder 166, 168 oder 190, 192) in eine Vielzahl von separaten Umfangsabschnitten unterteilt ist.

5.  Windturbine (20) gemäß den Ansprüchen 1-4, ferner umfassend eine dritte Bremsscheibe (60 oder 94 oder 112 oder 136 oder 136 oder 166 oder 190), die an dem Turm (22) befestigt und um die Gierachse (36) auf einer gegenüberliegenden Seite der zweiten Bremsscheibe (62 oder 96 oder 114 oder 138 oder 168 oder 192) in Bezug auf die erste Bremsscheibe (60 oder 94 oder 112 oder 136 oder 166 oder 190) angeordnet ist.

6.  Windturbine gemäß den Ansprüchen 1-4, ferner umfassend eine dritte Bremsscheibe (62 oder 96 oder 114 oder 138 oder 168 oder 192), die an der Gondel (24) befestigt und um die Gierachse (36) auf einer gegenüberliegenden Seite der ersten Bremsscheibe (60 oder 94 oder 112 oder 136 oder 166 oder 190) in Bezug auf die zweite Bremsscheibe (62 oder 96 oder 114 oder 138 oder 168 oder 192) angeordnet ist.

7.  Windturbine (20) gemäß einem der Ansprüche 1 bis 6, ferner umfassend ein Gierlager (48), das zwischen dem Turm (22) und der Gondel (24) angeordnet ist, wobei die erste Bremsscheibe (112 oder 190) durch eine erste Laufbahn (52) des am Turm (22) befestigten Gierlagers (48) gelagert ist und die zweite Bremsscheibe (114 oder 192) durch eine zweite Laufbahn (54) des an der Gondel (24) befestigten Gierlagers (48) gelagert ist.

8.  Windturbine (20) gemäß einem der Ansprüche 1-7, ferner umfassend einen Reibring (64 oder 98 oder 116 oder 170 oder 194), der zwischen der ersten und der zweiten Bremsscheibe (60, 62 oder 94, 96 oder 112, 114 oder 136, 138 oder 166, 168 oder 190, 192) angeordnet ist, wobei der Reibring (64 oder 98 oder 116 oder 170 oder 194) nicht mit der ersten Bremsscheibe (60 oder 94 oder 112 oder 136 oder 166 oder 190) verbunden ist und nicht mit der zweiten Bremsscheibe (62 oder 96 oder 114 oder 138 oder 168 oder 192) verbunden ist.

9.  Windturbine (20) gemäß einem der Ansprüche 1 bis 8, ferner umfassend eine zweite Gierbremse (66 oder 100 oder 118 oder 140 oder 172), die in Umfangsrichtung von der ersten Gierbremse (66 oder 100 oder 118 oder 140 oder 172) beabstandet und für eine Bewegung zwischen einer ersten Position, in der die zweite Gierbremse (66 oder 100 oder 118 oder 140 oder 172) eine erste Bremskraft auf die erste und zweite Bremsscheibe (60, 62 oder 94, 96 oder 112, 114 oder 136, 138 oder 166, 168) anwendet, und einer zweiten Position, in der die zweite Gierbremse (66 oder 100 oder 118 oder 140 oder 172) eine zweite Bremskraft auf die erste und zweite Bremsscheibe (60, 62 oder 94, 96 oder 112, 114 oder 136, 138 oder 166, 168) anwendet, konfiguriert ist, wobei die zweite Bremskraft größer ist als die erste Bremskraft.

10. Windturbine (20) gemäß Anspruch 9, wobei die mindestens eine von der ersten und der zweiten Bremskraft, die von der ersten Gierbremse (66 oder 100 oder 118 oder 140 oder 172) angewendet wird, von einer entsprechenden der ersten und der zweiten Bremskraft, die von der zweiten Gierbremse (66 oder 100 oder 118 oder 140 oder 172) angewendet wird, verschieden ist.

11. Windturbine (20) gemäß einem der Ansprüche 1-10, wobei die erste und die zweite Bremsscheibe (60, 62 oder 94, 96 oder 112, 114 oder 136, 138 oder 166, 168) in die Richtung der Gierachse (36) ausgerichtet sind und die erste Gierbremse (66 oder 100 oder 118 oder 140 oder 172) die Bremskraft in eine Richtung parallel zu der Gierachse anwendet.

12. Windturbine (20) gemäß den Ansprüchen 1-10, wobei die erste und die zweite Bremsscheibe (190, 192) in Bezug auf die Gierachse (36) radial ausgerichtet sind und die erste Gierbremse (196) die Bremskraft in einer radialen Richtung relativ zur Gierachse (36) anwendet.

13. Windturbine (20) gemäß Anspruch 12, wobei die erste Gierbremse Folgendes umfasst:

einen Ring, der radial auswärts der ersten und zweiten Bremsscheibe angeordnet ist; und einen Stellantrieb, der konfiguriert ist, um den Ring zusammenzudrücken, wenn die erste Gierbremse von der ersten Position auf die zweite Position bewegt wird.

14. Windturbine (20) gemäß Anspruch 12, wobei die erste Gierbremse (196) Folgendes umfasst:

einem Ring (202), der radial einwärts von der ersten und der zweiten Bremsscheibe (190, 192) angeordnet ist; und einen Stellantrieb (204), der konfiguriert ist, um den Ring (202) zu expandieren, wenn die erste Gierbremse (196) von der ersten Position auf die zweite Position bewegt wird.

15. Windturbine (20) gemäß Anspruch 14, wobei der Stellantrieb (204) Folgendes umfasst:

einen ersten Scherenarm (212), der ein erstes Ende gekoppelt mit einem ersten Umfangsende (208) des Rings (202) aufweist; einen zweiten Scherenarm (214), der ein erstes Ende gekoppelt mit einem zweiten Umfangsende (210) des Rings (202) aufweist; Einrichtungen (216), die mit den zweiten Enden des ersten und des zweiten Scherenarms (212, 214) verbunden sind, um die zweiten Enden des ersten und des zweiten Scherenarms (212, 214) voneinander weg zu bewegen, um den Ring (202) zu expandieren.

**Revendications**

1. Une éolienne (20), comprenant :

une tour (22), une nacelle (24) supportée sur la tour (22) et configurée pour tourner par rapport à la tour (22) autour d'un axe de lacet (36) ; un premier disque de frein (60 ou 94 ou 112 ou 136 ou 166 ou 190) fixé à la tour (22) et disposé autour de l'axe de lacet (36) **caractérisé par** :

un deuxième disque de frein (62 ou 96 ou 114 ou 138 ou 168 ou 192) fixé à la nacelle (24) et disposé autour de l'axe de lacet (36), le deuxième disque de frein (62 ou 96 ou 114 ou 138 ou 168 ou 192) aligné avec le premier disque de frein (60 ou 94 ou 112 ou 136 ou 166 ou 190) ; et, un premier frein de lacet (66 ou 100 ou 118 ou 140 ou 172 ou 196) configuré pour se déplacer entre une première position dans laquelle le premier frein de lacet (66 ou 100 ou 118 ou 140 ou 172 ou 196) applique une première force de freinage aux premier et deuxième disques de frein (60, 62 ou 94, 96 ou 112, 114 ou 136, 138 ou 166, 168 ou 190, 192) et une deuxième position dans laquelle le premier frein de lacet (66 ou 100 ou 118 ou 140 ou 172 ou 196) applique une deuxième force de freinage aux premier et deuxième disques de frein (60, 62 ou 94, 96 ou 112, 114 ou 136, 138 ou 166, 168 ou 190, 192), la deuxième force de freinage supérieure à la première force de freinage.

2. L'éolienne (20) selon la revendication 1, comprenant en outre :

un premier support (56 ou 90 ou 132 ou 162) supportant le premier disque de frein (60 ou 94 ou 136 ou 166) et fixé à une bride (68) de la tour (22) s'étendant radialement vers l'intérieur, et un deuxième support (58 ou 92 ou 134 ou 164) supportant le deuxième disque de frein (62 ou 96 ou 138 ou 168) et fixé à un cadre de lit (70) de la nacelle (24).

3. L'éolienne (20) selon la revendication 2 dans laquelle chacun des premier et deuxième supports (132, 134 ou 162, 164) est divisé en une pluralité de sections circonférentielles séparées, les premier et deuxième supports (132, 134 ou 162, 164) ayant des surfaces planes radialement intérieures et extérieures de sorte que le premier support (132 ou 162) et le deuxième support (132, 164) forment une forme polygonale autour de l'axe de lacet (36).

4. L'éolienne (20) selon l'une quelconque des revendications 1 à 3 dans laquelle chacun des premier et deuxième disques de frein (60, 62 ou 94, 96 ou 112, 114 ou 136, 138 ou 166, 168 ou 190, 192) est divisé en une pluralité de sections circonférentielles séparées.

5. L'éolienne (20) selon les revendications 1 à 4, comprenant en outre un troisième disque de frein (60 ou 94 ou 112 ou 136 ou 166 ou 190) fixé à la tour (22) et disposé autour de l'axe de lacet (36) sur un côté opposé du deuxième disque de frein (62 ou 96 ou 114 ou 138 ou 168 ou 192) par rapport au premier disque de frein (60 ou 94 ou 112 ou 136 ou 166 ou 190).

6. L'éolienne selon les revendications 1 à 4, comprenant en outre un troisième disque de frein (62 ou 96 ou 114 ou 138 ou 168 ou 192) fixé à la nacelle (24) et disposé autour de l'axe de lacet (36) sur un côté opposé du premier disque de frein (60 ou 94 ou 112 ou 136 ou 166 ou 190) par rapport au deuxième disque de frein (62 ou 96 ou 114 ou 138 ou 168 ou 192).

7. L'éolienne (20) selon l'une quelconque des revendications 1 à 6, comprenant en outre un palier de lacet (48) disposé entre la tour (22) et la nacelle (24) dans laquelle le premier disque de frein (112 ou 190) est supporté par une première bague (52) du palier de lacet (48) fixée à la tour (22) et le deuxième disque de frein (114 ou 192) est supporté par une deuxième bague (54) du palier de lacet (48) fixée à la nacelle (24).

8. L'éolienne (20) selon l'une quelconque des revendications 1 à 7, comprenant en outre un anneau de friction (64 ou 98 ou 116 ou 170 ou 194) disposé entre les premier et deuxième disques de frein (60, 62 ou 94, 96 ou 112, 114 ou 136, 138 ou 166, 168 ou 190, 192), l'anneau de friction (64 ou 98 ou 116 ou 170 ou 194) n'étant pas lié au premier disque de frein (60 ou 94 ou 112 ou 136 ou 166 ou 190) et n'étant pas lié au deuxième disque de frein (62 ou 96 ou 114 ou 138 ou 168 ou 192).

9. L'éolienne (20) selon l'une quelconque des revendications 1 à 8, comprenant en outre un deuxième frein de lacet espacé (66 ou 100 ou 118 ou 140 ou 172) circonférentiellement du premier frein de lacet (66 ou 100 ou 118 ou 140 ou 172) et configuré pour se déplacer entre une première position dans laquelle le deuxième frein de lacet (66 ou 100 ou 118 ou 140 ou 172) applique une première force de freinage aux premier et deuxième disques de frein (60, 62 ou 94, 96 ou 112, 114 ou 136, 138 ou 166, 168) et une deuxième position dans laquelle le deuxième frein de lacet (66 ou 100 ou 118 ou 140 ou 172) applique une deuxième force de freinage aux premier et deuxième disques de frein (60, 62 ou 94, 96 ou 112, 114 ou 136, 138 ou 166, 168), la deuxième force de freinage supérieure à la première force de freinage.

10. L'éolienne (20) selon la revendication 9, dans laquelle l'au moins une des première et deuxième forces de freinage appliquées par le premier frein de lacet (66 ou 100 ou 118 ou 140 ou 172) diffère d'une force de freinage correspondante des première et deuxième forces de freinage appliquées par le deuxième frein de lacet (66 ou 100 ou 118 ou 140 ou 172).

11. L'éolienne (20) selon l'une quelconque des revendications 1 à 10 dans laquelle les premier et deuxième disques de frein (60, 62 ou 94, 96 ou 112, 114 ou 136, 138 ou 166, 168) sont alignés dans la direction de l'axe de lacet (36) et le premier frein de lacet (66 ou 100 ou 118 ou 140 ou 172) applique la force de freinage dans une direction parallèle à l'axe de lacet.

12. L'éolienne (20) selon les revendications 1 à 10 dans laquelle les premier et deuxième disques de frein (190, 192) sont alignés radialement par rapport à l'axe de lacet (36) et le premier frein de lacet (196) applique la force de freinage dans une direction radiale par rapport à l'axe de lacet (36).

13. L'éolienne (20) selon la revendication 12, dans laquelle le premier frein de lacet comprend :

   un anneau disposé radialement vers l'extérieur des premier et deuxième disques de frein ; et, un actionneur configuré pour comprimer l'anneau lorsque le premier frein de lacet se déplace de la première position à la deuxième position.

14. L'éolienne (20) selon la revendication 12, dans laquelle le premier frein de lacet (196) comprend :

   un anneau (202) disposé radialement vers l'intérieur des premier et deuxième disques de frein (190, 192) ; et, un actionneur (204) configuré pour élargir l'anneau (202) lorsque le premier frein de lacet (196) se déplace de la première position à la deuxième position.

15. L'éolienne (20) selon la revendication 14, dans laquelle l'actionneur (204) comprend :

   un premier bras de ciseaux (212) ayant une première extrémité couplée à une première extrémité circonférentielle (208) de l'anneau (202) ; un deuxième bras de ciseaux (214) ayant une première extrémité couplée à une deuxième extrémité circonférentielle (210) de l'anneau (202) ; et des moyens (216), connectés aux deuxièmes extrémités des premier et deuxième bras des ciseaux (212, 214), pour écarter les deuxièmes extrémités des premier et deuxième bras des ciseaux (212, 214) l'un de l'autre pour élargir l'anneau (202).

FIG. 1

FIG. 2

FIG. 3

FIG. 4

FIG. 5

FIG. 6

FIG. 7

FIG. 8

FIG. 9

FIG. 11

FIG. 12

FIG. 15

FIG. 10

FIG. 14

FIG. 13

FIG. 16

EP 3 412 907 B1

FIG. 17

EP 3 412 907 B1

FIG. 18

EP 3 412 907 B1

FIG. 19

**EP 3 412 907 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2306008 A2